Europäisches Patentamt

European Patent Office

Office européen des brevets

(19)

(11) Veröffentlichungsnummer: **0 237 802**
**B1**

(12) **EUROPÄISCHE PATENTSCHRIFT**

(45) Veröffentlichungstag der Patentschrift:
09.05.90

(51) Int. Cl.⁵: **C01F 11/46, C04B 11/024**

(21) Anmeldenummer: 87102121.8

(22) Anmeldetag: 14.02.87

(54) Verfahren zur Herstellung von Calciumsulfat-Anhydrit und abbindefähigen Calciumsulfaten.

(30) Priorität: 20.02.86 DE 3605393
25.07.86 DE 3625186

(43) Veröffentlichungstag der Anmeldung:
23.09.87 Patentblatt 87/39

(45) Bekanntmachung des Hinweises auf die Patenterteilung:
09.05.90 Patentblatt 90/19

(84) Benannte Vertragsstaaten:
AT BE DE GB NL SE

(56) Entgegenhaltungen:
EP-A- 0 012 487
DE-A- 1 567 505
DE-A- 1 646 434
DE-A- 1 796 242
FR-A- 2 510 548
GB-A- 1 184 585
US-A- 2 956 859

(73) Patentinhaber: Gebr. Knauf Westdeutsche Gipswerke KG, Postfach 10, D-8715 Iphofen(DE)

(72) Erfinder: Boos, Friedrich-Wilhelm, Dr., Dipl.-Chem., Rauxeler Strasse 29, D-4620 Castrop-Rauxel(DE)
Erfinder: Wirsching, Franz, Dr., Dipl.-Chem., In den Weinbergen 7, D-8715 Iphofen(DE)

(74) Vertreter: Werner, Hans-Karsten, Dr. et al, Deichmannhaus am Hauptbahnhof, D-5000 Köln 1(DE)

ACTORUM AG

## Beschreibung

Gegenstand der vorliegenden Erfindung ist ein Verfahren zur Herstellung von Calciumsulfat-Anhydrit und abbindefähigen Calciumsulfaten durch Umsetzung von Calciumsulfat-Dihydrat mit Säuren bei erhöhten Temperaturen.

Es ist bekannt, daß Calciumsulfat-Dihydrat durch Erhitzen in trockener Form zunächst zum Beta-Calciumsulfat-Halbhydrat entwässert wird, welches bei weiterem Erhitzen den Rest seines Kristallwassers verliert und dabei in Calciumsulfat-Anhydrit überführt wird. Bei diesen Verfahren entsteht zuerst das Calciumsulfat-Anhydrit III (lösliches Calciumsulfat), welches weitgehend die Kristallstruktur des Calciumsulfat-Halbhydrats beibehalten hat. Es ist daher in der Lage, relativ leicht zu rehydratisieren und in an sich bekannter Weise zum Calciumsulfat-Dihydrat überzugehen. Calciumsulfat-Anhydrit III ist somit eine relativ rasch mit Wasser abbindende Form des Calciumsulfates. Bei weiterem Erhitzen entsteht das Calciumsulfat-Anhydrit II (unlösliches Calciumsulfat), welches bei rhombischem Kristallgitter dichteste Kugelpackung aufweist und gegen Wasser relativ stabil ist (bei Temperaturen unter 40°C).

Es ist weiterhin bekannt, daß Calciumsulfat-Dihydrat beim Erhitzen in Suspension in Schwefelsäure, gegebenenfalls auch in Gegenwart mehr oder weniger großer Mengen Phosphorsäure, einen Teil seines Kristallwassers verliert und in Alpha-Calciumsulfat-Halbhydrat überführt wird. Insbesondere in Gegenwart von Eisenionen bildet sich unter diesen Bedingungen nicht das Alpha-Halbhydrat, sondern Anhydrit; vgl. DE-B 1 796 242. Aus der EP-A 0 012 488 geht hervor, daß sich das Calciumsulfat-Halbhydrat vorzugsweise in einer Suspension mit Schwefelsäure der Konzentration von 40 bis 60 Gew.-% bei Temperaturen von 40 bis 80°C in Gegenwart von mindestens einer vierwertigen Metallverbindung bildet. Aus der EP-B 0 012 487 geht hervor, daß unter vergleichbaren Bedingungen, insbesondere unter Anwesenheit von di-, tri- und/oder pentavalenten Metallverbindungen sich ein Calciumsulfat-Anhydrit mit einer mittleren Teilchengröße von 0,5 bis 3 μm bildet. Die in den beiden europäischen Patentschriften beschriebenen Verfahren wurden vorzugsweise durchgeführt mit Calciumsulfat-Dihydrat, welches bei der Produktion von Phosphorsäure anfällt. Es handelt sich somit um sogenannten Phosphogips.

Weitere Verfahren zur Herstellung von zum Teil bereits sehr feinteiligem Calciumsulfat-Anhydrit, unter Anwendung zum Teil sehr hoher Temperaturen, sind beispielsweise bekannt aus der US-A 4 080 422, in welcher gemahlenes Dihydrat bei 800 bis 1200°C in die heißen Gase eines Flash-Trockners eingeblasen wird. Gemäß JP-A 77 114.494 (Chem. Abstr. 88, 1978, No. 12, Nr. 78089) wird Phosphogips mit der drei- bis achtfachen Menge Calciumphosphat bei 900°C gebrannt und gemahlen, wobei ein Anhydrit II entsteht, welcher mit Alaun und Wasser angerührt wieder abbindet.

Sofern Calciumsulfat-Dihydrat und/oder Calciumsulfat-Halbhydrat mit Hilfe von Schwefelsäure und niedrigeren Temperaturen in Anhydrit II überführt wurde, war es stets notwendig, in Suspension zu arbeiten und relativ große Mengen Schwefelsäure einzusetzen. So wird beispielsweise gemäß EP-A 0 112 317 Alpha-Hemihydrat aus einem nassen Phosphorsäure-Verfahren in Suspension in überschüssiger, mindestens 35%-iger Schwefelsäure mindestens 60 min. auf mindestens 60°C erwärmt, wobei sich feinverteiltes Anhydrit bildet.

Die Teilchengröße liegt je nach Verfahrensbedingungen zwischen 2 und 40 μm. Aus der darin zitierten Norwegischen Patentschrift 54, 999 aus dem Jahre 1931 geht hervor, daß durch Erwärmen von Calciumsulfat-Anhydrit III (lösliches Calciumsulfat) mit 24%-iger Schwefelsäure ein feinteiliges amorphes Anhydrit gebildet wird. Die Säuremenge mußte dabei so groß sein, daß das Anhydrit III mindestens vollständig naß war. Vorzugsweise wurden größere Mengen Säure eingesetzt. Es wird darauf hingewiesen, daß bei höheren Säurekonzentrationen und höheren Temperaturen erhebliche Mengen des Calciumsulfats sich zersetzen unter Bildung von Calciumbisulfat oder bei Verwendung von zu verdünnter Schwefelsäure Calciumsulfat-Dihydrat entsteht.

Auch aus den US-A 2 021 910, 2 822 242 und 2,956,859 geht hervor, daß sich Anhydrit nur in Anwesenheit relativ hoher Mengen relativ konzentrierter Schwefelsäure, also in Suspension, bildet und hierbei höhere Temperaturen die Umwandlung stark beschleunigen, jedoch auch zu gröber kristallinen Produkten führen.

Es wurde jetzt überraschenderweise gefunden, daß die Herstellung von Calciumsulfat-Anhydrit II durch Umsetzung von Calciumsulfat-Dihydrat mit Schwefelsäure bei erhöhten Temperaturen auch in der Weise durchgeführt werden kann, daß feinteiliges Calciumsulfat-Dihydrat mit nur 0,5 bis 7 Gew.-%, vorzugsweise 1 bis 3 Gew.-% Schwefelsäure und einem Flüssigkeitsgehalt von weniger als 20 Gew.-%, vorzugsweise zwischen 7 und 14 Gew.-%, auf Temperaturen von 50 bis 130°C, vorzugsweise 70 bis 100°C erwärmt und gegebenenfalls mit der äquivalenten Menge Calciumhydroxid neutralisiert wird. Der Flüssigkeitsgehalt ist dabei so gering, daß die Reaktionspartner als feuchtes, feinteiliges Pulver vorliegen und in diesem Zustand die Reaktion des Dihydrats zum Anhydrit erfolgt.

Unter den erfindungsgemäßen Bedingungen kann somit mit wesentlich geringeren Mengen Schwefelsäure als bisher üblich und bei relativ niedrigen Temperaturen ein feines, kristallines, rhombisches Anhydrit II erhalten werden, welches ausgezeichnete Eigenschaften aufweist und in mehrfacher Weise verwertet bzw. weiterverarbeitet werden kann. Die eingesetzten Säuremengen sind so niedrig, daß sie für gewisse Verwendungszwecke sogar im Produkt verbleiben können. Gegebenenfalls ist es aber auch möglich, diese Säuremengen nach der Umwandlung mit der äquivalenten Menge Calciumhydroxid zu neutralisieren. Das dabei entstehende Neutralisationsprodukt ist ebenfalls kristallines Anhydrit II.

Es wurde weiterhin gefunden, daß unter vergleichbaren Bedingungen, jedoch unter Verwendung von Phosphorsäure, zunächst einmal ein Calciumsulfat-Halbhydrat entsteht, welches in seinen Eigenschaften dem Alpha-Calciumsulfat-Halbhydrat nahekommt. Das unter diesen Bedingungen entstehende Halbhydrat liegt bezüglich seiner chemischen und physikalischen Eigenschaften zwischen dem Alpha-Calciumsulfat-Halbhydrat und dem Beta-Calciumsulfat-Halbhydrat.

Wird unter gleichen Bedingungen, also auch bei gleicher Temperatur, die Erwärmung zeitlich fortgesetzt, so entsteht aus Calciumsulfat-Halbhydrat letztendlich das Calciumsulfat-Anhydrit II. Die Reaktion kann durch Abkühlen auf z.B. Zimmertemperatur jederzeit unterbrochen werden. Es können so durch zeitliche Steuerung entweder reine Calciumsulfat-Halbhydrate als auch reiner Calciumsulfat-Anhydrit II, als auch Gemische beider Stoffe erhalten werden.

Es wurde weiterhin gefunden, daß bei Verwendung von Gemischen aus Phosphorsäure und Schwefelsäure die Reaktion so verläuft, daß ein Teil des Calciumsulfat-Dihydrates zu Calciumsulfat-Halbhydrat reagiert, während ein anderer Teil in Calciumsulfat-Anhydrit übergeht. Man erhält somit unter Verwendung von Phosphorsäure und Schwefelsäure stets Gemische aus Calciumsulfat-Halbhydrat und Calciumsulfat-Anhydrit.

Es ist erfindungsgemäß somit möglich, durch Variation des Mischungsverhältnisses aus Phosphorsäure und Schwefelsäure sowie der Reaktionstemperatur und Reaktionsdauer gezielt und reproduzierbar Gemische herzustellen, die mehr oder weniger große Mengen Calciumsulfat-Halbhydrat und mehr oder weniger große Mengen Calciumsulfat-Anhydrit enthalten.

Unter den erfindungsgemäßen Bedingungen kann somit mit wesentlich geringeren Mengen von Säure als bisher üblich und bei relativ niedrigen Temperaturen ein neues abbindefähiges Calciumsulfat mit Gemischen aus Calciumsulfat-Halbhydrat und Calciumsulfat-Anhydrit hergestellt werden, welches ausgezeichnete Eigenschaften aufweist und in mehrfacher Weise verwertet bzw. weiterverarbeitet werden kann.

Besonders überraschend war, daß als Ausgangsmaterial feinteiliges Calciumsulfat-Dihydrat verschiedenster Herkunft verwendet werden kann. Als feinteiliges Calciumsulfat-Dihydrat kann beispielsweise feinvermahlenes, natürlich gewonnenes Calciumsulfat-Dihydrat eingesetzt werden. Vorzugsweise wird jedoch das zukünftig in großen Mengen anfallende feuchte feinteilige Calciumsulfat-Dihydrat aus der Rauchgasentschwefelung verwendet.

Ein besonderer Vorteil des erfindungsgemäßen Verfahrens ist, daß die für die Reaktion erforderlichen Temperaturen von 50 bis 130°C, vorzugsweise 70 bis 100°C, aus der Abfallwärme eines Kraftwerkes gewonnen werden können. Das Verfahren ist somit besonders einfach und wirtschaftlich durchführbar, wenn Rauchgasgips am Ort seiner Entstehung unmittelbar zu dem gewünschten feinstkristallinen, rhombischen Calciumsulfat-Anhydrit II und/oder den gewünschten abbindefähigen Calciumsulfaten umgesetzt wird.

Das erfindungsgemäß erhaltene Produkt kann beispielsweise mitsamt seiner Restsäure oder in neutralisierter Form gut kompaktiert werden und dann der Zementindustrie zugeführt werden. Es hat sich weiterhin gezeigt, daß das erfindungsgemäße Produkt ausgezeichnet mit Rauchgasgips-Dihydrat vermischt und kompaktiert werden kann, so daß die von der Zementindustrie bevorzugten Anhydrit-Dihydrat-Gemische hergestellt werden können. Schließlich ist möglich, das Verfahren so durchzuführen, daß die Überführung des Calciumsulfat-Dihydrats zum Calciumsulfat-Anhydrit II nur unvollständig erfolgt und das so erhaltene Gemisch aus Calciumsulfat-Anhydrit und Calciumsulfat-Dihydrat gewünschtenfalls mit der äquivalenten Menge Calciumhydroxid neutralisiert und dann kompaktiert der Zementindustrie angeboten werden kann.

Eine weitere, sehr interessante Verwendungsmöglichkeit für das erfindungsgemäße Produkt besteht darin, das fertige Calciumsulfat-Anhydrit II naß zu vermahlen auf Teilchengrößen von kleiner als 5 µm, vorzugsweise kleiner als 2 µm Oberkorn. Das so erhaltene Produkt ist ausgezeichnet geeignet als Füllstoff und sogar als Streichmittel in der Papierindustrie.

Hierbei ist von besonderer Bedeutung, daß das erfindungsgemäße Produkt nicht oder nur sehr langsam wieder mit Wasser reagiert und daher zumindest ohne Schwierigkeiten mit Wasser gewaschen und getrocknet werden kann, ohne daß sich erneut das Ausgangsprodukt Calciumsulfat-Dihydrat bildet. Überraschenderweise ist auch der Weißgrad des so erhaltenen feingemahlenen Produktes so hoch, daß es als Papier-Streich-Pigment eingesetzt werden kann. Sofern beabsichtigt ist, das feingemahlene Produkt längere Zeit als wäßrige Suspension zu lagern, kann die Rehydratisation zum Dihydrat auch durch Verzögerer wie Polyphosphate verhindert oder verzögert werden, vorausgesetzt, daß diese Zusätze bei der Weiterverarbeitung oder im Endprodukt nicht stören.

Das so erhaltene erfindungsgemäße Produkt ist als Pigment und/oder Füllstoff beispielsweise einsetzbar für Kunststoffe, Dispersionsfarben und Klebstoffe. Für diese Verwendungszwecke sollte das Ausgangsmaterial folgende Spezifikation erfüllen:

| | |
|---|---|
| Feuchtigkeit | <10% |
| Reinheitsgrad (Gipsgehalt) | >95% |
| Magnesiumoxid wasserlöslich | <0,1% |
| Natriumoxid | <0,06% |
| Chlorid | <0,01% |
| Calciumsulfit | <0,5% |
| pH-Wert | 5–9 |
| Weißgrad | >70% |

Zur Durchführung des erfindungsgemäßen Verfahrens wird beispielsweise feuchter, feinteiliger Rauchgasgips im Anfallzustand mit der erforderlichen Menge Schwefelsäure vermischt und auf die gewünschte Temperatur gebracht.

Je nach der angewendeten Temperatur, einer etwaigen Rührung und Belüftung schreitet die Reaktion schneller voran, wird jedoch auch etwas Schwefelsäure in die Gasphase abgegeben. Die Reaktion geht so vor sich, daß die ursprünglich eingesetzten feinteiligen Calciumsulfat-Dihydrat-Teilchen zunächst äußerlich weitgehend erhalten bleiben, jedoch während der Umwandlung in Agglomerate feinstkristalliner Anhydrit-Teilchen übergehen. Diese Agglomerate lassen sich daher besonders einfach zu feinstkristallinen Teilchen dispergieren. Besonders geeignet ist die Naßdispergierung.

Die Untersuchungen haben gezeigt, daß bei Säuremengen unter 0,5 Gew.-% zwar auch schon eine sehr langsame Entwässerung zum Anhydrit II stattfindet, die Umwandlung jedoch so langsam verläuft, daß dies die Wirtschaftlichkeit des Verfahrens in Frage stellt. Vorzugsweise wird daher mit einer Mindestkonzentration von 1 Gew.-% Schwefelsäure gearbeitet. Es wurde weiterhin festgestellt, daß Schwefelsäuremengen von mehr als 7 Gew.-% wie bei den Verfahren nach dem Stand der Technik die Wiederabtrennung erforderlich machen und die Wirtschaftlichkeit des Verfahrens in Frage stellen. Vorzugsweise wird daher nur mit Schwefelsäuremengen von bis zu 3 Gew.-% gearbeitet. Die Schwefelsäuremenge kann beispielsweise dem feinverteilten feuchten Calciumsulfat-Dihydrat in mehr oder weniger konzentrierter Form zugegeben werden. Auf alle Fälle muß der Gesamtflüssigkeitsgehalt des Gemisches weniger als 20 Gew.-%, vorzugsweise zwischen 7 und 14 Gew.-%, betragen. Höhere Flüssigkeitsgehalte führen bereits zu unerwünschten Verklebungen und Verklumpungen. Geringere Feuchtigkeitsgehalte als 5 Gew.-% sind für das Verfahren technisch weniger geeignet. Durch diesen Flüssigkeitsgehalt befindet sich das Gemisch der Reaktionspartner in einem feuchten, pulverigen Zustand, in welchem dann die Reaktion stattfindet. Die erfindungsgemäße Arbeitsweise unterscheidet sich somit grundlegend von der bisher bekannten Arbeitsweise in Suspension.

Insbesondere geeignet sind die erfindungsgemäß hergestellten abbindefähigen Calciumsulfate für Hartputze und Bergbaumörtel. Die Eigenschaften entsprechen abgebundenen Gipsen aus Calciumsulfaten mit hohem Gehalt an Alpha-Calciumsulfat-Halbhydrat. Sie weisen jedoch den Vorteil auf, im Gegensatz zu Phosphogipsen keine Radioaktivität aufzuweisen.

Da Rauchgasgips mit einem Feuchtigkeitsgehalt von 7 bis 12%, vorzugsweise sogar meist weniger als 10% Restfeuchtigkeit anfällt, bestünde prinzipiell die Möglichkeit, den letzten Waschvorgang mit einer ausreichend konzentrierten Säure durchzuführen und das so erhaltene Produkt auf die Reaktionstemperaturen von 50 bis 130°C, vorzugsweise 70 bis 100°C, zu bringen. Das erfindungsgemäße Verfahren kann besonders wirtschaftlich so durchgeführt werden, daß der noch feuchte Rauchgasgips mit einer entsprechenden Menge Säure versetzt, vermischt und dann erwärmt wird. Diese Reaktion kann zu Ende geführt werden oder auch vor der vollständigen Umwandlung in Anhydrit II unterbrochen werden. So können beispielsweise für die Zementindustrie vorkonfektionierte Gemische aus Calciumsulfat-Anhydrit und Calciumsulfat-Dihydrat ohne weiteres hergestellt werden oder Gemische aus Anhydrit II und abbindefähigen Calciumsulfaten.

Gegenstand der vorliegenden Erfindung ist somit das Verfahren zur Herstellung von Calciumsulfat-Anhydrit und abbindefähigen Calciumsulfaten durch Umsetzung von Calciumsulfat-Dihydrat mit Säuren bei erhöhten Temperaturen, dadurch gekennzeichnet, daß feinteiliges Calciumsulfat-Dihydrat mit 0,5 bis 7 Gew.-%, vorzugsweise 1 bis 3 Gew.-% Schwefelsäure, Phosphorsäure oder Gemischen derselben mit einem Flüssigkeitsgehalt von weniger als 20 Gew.-%, vorzugsweise zwischen 5 und 14 Gew.-% für eine bestimmte Zeit auf Temperaturen von 50 bis 130°C, vorzugsweise 70 bis 100°C erwärmt und gegebenenfalls mit der äquivalenten Menge Calciumhydroxid neutralisiert wird.

Bei Verwendung von reiner Phosphorsäure und entsprechend zeitlicher Steuerung ist es möglich, reines Calciumsulfat-Halbhydrat zu gewinnen. Bei Verwendung von Gemischen aus Phosphorsäure und Schwefelsäure ist es möglich, Gemische aus Calciumsulfat-Halbhydrat und Calciumsulfat-Anhydrit zu gewinnen. Es ist auch möglich, die Umsetzung zeitlich gesteuert unvollständig durchzuführen und dabei Dreiphasen-Gemische aus Calciumsulfat-Dihydrat, Calciumsulfat-Halbhydrat und Calciumsulfat-Anhydrit zu erhalten. Die Gemische aus Phosphorsäure und Schwefelsäure werden vorzugsweise im Verhältnis bis zu 1 : 2 eingesetzt.

Ein weiterer Gegenstand der Erfindung ist die Verwendung der erfindungsgemäß hergestellten abbindefähigen Calciumsulfate für Hartputze und Bergbaumörtel und des Calciumsulfat-Anhydrits als Füllstoff und Streichmittel in der Papierindustrie.

Zur Durchführung des erfindungsgemäßen Verfahrens wird beispielsweise feuchter, feinteiliger Rauchgasgips im Anfallzustand mit der erforderlichen Menge Schwefelsäure, Phosphorsäure oder dem Gemisch aus Phosphorsäure und Schwefelsäure vermischt und für eine bestimmte Zeit auf die gewünschte Temperatur gebracht.

Je nach der angewendeten Temperatur und Zeit und nach einer etwaigen Rührung und Belüftung schreitet die Reaktion schneller voran. Sofern Schwefelsäure mitverwendet wird, wird diese jedoch auch etwas in die Gasphase abgegeben und muß demzufolge in geeigneter Weise wieder hieraus entfernt werden. Bei Verwendung von reiner Phosphorsäure ist dies hingegen nicht notwendig.

Die Reaktion geht so vor sich, daß die ursprünglich eingesetzten feinteiligen Calciumsulfat-Dihydrat-Teilchen zunächst äußerlich weitgehend erhalten bleiben, jedoch während der Umwandlung in Agglomerate der abbindefähigen Calciumsulfate bzw. deren Gemische übergehen.

Die Durchführung des erfindungsgemäßen Verfahrens ist beispielsweise möglich in sogenannten Tellertrocknern, von denen vorzugsweise mehrere übereinander einen sogenannten Etagentrockner bilden. Auf diesen Tellertrocknern wird das feuchte und rieselfähige Gemisch durch einen langsamen Rührarm mit Transportschaufeln spiralförmig entweder von innen nach außen oder von außen nach innen transportiert, um danach auf dem darunterliegenden Trocknungsteller in der Gegenrichtung transportiert zu werden. Es ist so möglich, unter Einhaltung nahezu konstanter Temperaturen und konstanter Durchlaufzeiten reproduzierbar Temperatur und Verweilzeit einzustellen und dadurch auch zu reproduzierbaren Ergebnissen zu kommen. Derartige Etagentrockner gewähren somit eine kontinuierliche Dehydratation bei genauer Temperaturführung und variablen Verweilzeiten. Der Energiebedarf ist gering, der thermische Wirkungsgrad hingegen hoch. Es entstehen geringe Staubprobleme, da eine geringe mechanische Beanspruchung des Gutes erfolgt. Die Brüden, welche gegebenenfalls etwas Schwefelsäure enthalten, werden an nur einer Stelle entnommen und können von dort entweder kondensiert oder in anderer Weise aufgereinigt werden. In derartigen Tellertrocknern werden Verweilzeiten von 20 bis 300 Minuten, vorzugsweise 30 bis 120 Minuten gewählt. Die gewählte Verweilzeit hängt vor allem ab von der Schichthöhe des Ausgangsmaterials, aber auch von der Korngrößenverteilung und dem Feuchtigkeitsgehalt. Das erfindungsgemäße Verfahren kann aber auch in anderen bekannten und in der Gipsindustrie verwendeten Trocken- und Calciniergeräten durchgeführt werden.

In den nachfolgenden Beispielen ist das erfindungsgemäße Verfahren näher erläutert:

## Beispiel 1

50 kg trockener REA-Gips-Dihydrat werden mit 1,5 l Schwefelsäure von der Dichte 1,74, die mit 5 l $H_2O$ verdünnt ist, gemischt und auf 90°C erwärmt. Nachdem das gesamte Wasser (Feuchtwasser und Kristallwasser) der Mischung verdampft ist, was unter den Versuchsbedingungen nach etwa 2 Stunden erfolgt ist, wird mit ca. 600 g $Ca(OH)_2$ neutralisiert und etwa 15 Minuten nachgerührt.

Das dabei entstandene Produkt ist kristallines rhombisches Calcium-Sulfat-Anhydrit II.

Der Weißgrad steigt dabei an von 76% im REA-Gips-Dihydrat auf 91% im REA-Anhydrit II.

## Beispiel 2

50 kg REA-Gips-Dihydrat mit einer freien Feuchte von 8% werden mit 1,5 l Schwefelsäure, Dichte 1,74, die mit 1 l Wasser verdünnt wurde, gemischt und auf 100°C aufgeheizt.

Nach Verdampfen der gesamten Wassermenge (Feuchtwasser und Kristallwasser), was unter den Versuchsbedingungen nach etwa 2 Stunden erfolgt ist, wird mit ca. 600 g $Ca(OH)_2$ neutralisiert und in der Wärme nachgerührt. Das dabei entstandene Produkt ist kristallines rhombisches Calcium-Sulfat-Anhydrit II. Der Weißgrad steigt dabei an von 80% im REA-Gips-Dihydrat auf 90% im REA-Anhydrit II.

## Beispiel 3

50 kg REA-Gips werden, wie im Beispiel 1 oder 2 beschrieben, mit Schwefelsäure in der Wärme behandelt und nach Abtreiben des in der Mischung vorhandenen Gesamtwassers in etwa 200 l kochend heißem Wasser aufgeschlämmt und abfiltriert. Der so erhaltene Filterkuchen kann getrocknet oder direkt einer Naßmahlung zugeführt werden.

## Beispiel 4

50 kg REA-Gips werden nach Schwefelsäurezugabe und Wärmebehandlung, wie im Beispiel 3 beschrieben, in heißem Wasser aufgeschlämmt, das mit ca. 600 g $Ca(OH)_2$ zur Neutralisation der im Calciumsulfat-Anhydrit II verbliebenen Schwefelsäure versetzt war. Nach der Abfiltration kann der Filterkuchen in bekannter Weise getrocknet werden.

## Beispiel 5

Der nach den Beispielen 1 bis 4 erhaltene Calciumsulfat-Anhydrit II läßt sich ohne Zusatz von Wasser oder Bindemitteln allein oder im Gemisch mit REA-Gips-Dihydrat auf Walzenpressen in bekannter Weise kompaktieren. Die erhaltenen Preßstücke haben Punktfestigkeiten über 10 N und sind im Freien lagerbar.

## Beispiel 6

50 kg trockenes REA-Gips-Dihydrat werden mit einem Gemisch aus 1 kg 85%-iger Phosphorsäure und 5,5 l Wasser gemischt und in einen Etagentrockner so eingegeben, daß das Gemisch auf 90°C erwärmt wird und 40 Minuten im Etagentrockner verweilt. Im Gegenstrom wird ein langsamer Luftstrom durchgeleitet, welcher das abgegebene Wasser aus dem System entfernt.

Am unteren Ausgang des Etagentrockners erscheint ein trockenes Produkt, welches sich analytisch als reines Calciumsulfat-Halbhydrat herausstellt und nur Spuren von Calciumsulfat-Anhydrit enthält. Dieses Produkt verhält sich physikalisch und bezüglich seiner Abbindeeigenschaften ähnlich dem Alpha-Calciumsulfat-Halbhydrat. Die Einstreumenge beträgt beispielsweise ca. 200 g/100 ml Wasser. Alpha-Calciumsulfat-Halbhydrat weist hingegen Einstreumengen von 200 bis 300 g/100 ml Wasser auf. Beta-Calciumsulfat-Halbhydrat hat hingegen Einstreumengen von 120 bis 160 g/100 ml Wasser.

Das erhaltene Calciumsulfat-Halbhydrat bindet normal ab. In abgebundenem Zustand weist es eine hohe Dichte und hohe Festigkeit auf, die nahezu dem des abgebundenen Alpha-Calciumsulfat-Halbhydrats entspricht. Das Produkt ist ausgezeichnet geeignet für Hartputze, die etwa den Anforderungen des sogenannten Keene-Zements entsprechen, oder Produkte, wie sie beispielsweise aridisierte Gipse aufweisen.

Bei Fortführung der Reaktion über 40 Minuten bei 90°C, z.B. durch Verlängerung der Verweilzeit des Gutes im Etagentrockner über 40 Minuten hinaus, entstehen abbindefähige Gemische aus Calciumsulfat-Halbhydrat und Calciumsulfat-Anhydrit II.

Die Anteile an beiden Calciumsulfaten können über die Verweilzeit gesteuert werden. Bei noch längerer Verweilzeit entsteht reines Calciumsulfat-Anhydrit II.

Beispiel 7

50 kg REA-Gips-Dihydrat mit einer freien Feuchte von 8% werden mit einem Gemisch aus 500 g Schwefelsäure (Dichte 1,74) und 500 g Phosphorsäure (85%-ig) sowie 1 Liter Wasser gemischt und, wie in Beispiel 6 beschrieben, in einem Etagentrockner 70 Minuten bei 90°C gehalten. Das unten austretende Produkt enthielt 60 Gew.-% des oben beschriebenen neuen Calciumsulfat-Halbhydrates und 37 Gew.-% Anhydrit II sowie noch freie Säure. Auch dieses Produkt weist eine Einstreumenge von ca. 200 g/100 ml auf und bindet mit Wasser normal zu einem harten Produkt hoher Festigkeit ab.

Durch Zusatz von ca. 600 g $Ca(OH)_2$ kann dieses Produkt neutralisiert und in der Wärme nachgerührt werden. Es entsteht dadurch ein neutrales, dennoch normal und hart abbindendes Produkt. Bei zeitlich unterbrochener Reaktion, d.h. bei weniger als 70 Minuten Reaktionszeit bei 90°C, können so Gemische aus Calciumsulfat-Halbhydrat, Calciumsulfat-Anhydrit II und nicht umgesetztem Calciumsulfat-Dihydrat erhalten werden.

Aus den obigen Beispielen geht deutlich hervor, daß bei dem erfindungsgemäßen Verfahren mit feuchten Pulvern während der Reaktion sowohl das Feuchtwasser als auch das Kristallwasser verdampfen und aus dem Produkt entfernt werden. Dies kann auch unter vermindertem Druck erfolgen. Beim Arbeiten in Suspension nach dem Stand der Technik verbleiben hingegen die Wassermenge der Säure und das abgespaltene Kristallwasser im Gemisch.

Es muß daher anschließend in flüssiger Form beispielsweise durch Filtrieren oder Zentrifugieren von den festen Bestandteilen der Suspension abgetrennt werden. Erstaunlicherweise entstehen beim erfindungsgemäßen Verfahren mit feuchten Pulvern Produkte, die sich bezüglich Eigenschaften, Aussehen und Kristallstruktur deutlich von den Produkten unterscheiden, die nach dem Verfahren gemäß Stand der Technik in Suspension durch Rekristallisation entstehen.

Es wurde weiterhin festgestellt, daß man durch Zusätze wie Aluminiumfluorid-Trihydrat ($AlF_3\cdot3H_2O$) und andere komplexe Aluminiumfluoride in Mengen von weniger als 1 Gew.-%, bezogen auf den trockenen Rauchgasgips, feinstkristalline Produkte kompakter, quader- bis würfelförmiger, geschichteter Struktur erhält, deren Teilchengröße etwa 5 μm beträgt. Geeignete komplexe Aluminiumfluoride sind beispielsweise Kaliumaluminiumfluorid ($KAlF_4$) und Natriumaluminiumfluorid ($Na_5Al_;+i3F_{14}$ ⚹ Chiolith). Sie werden in Mengen von 0,2 bis 0,7 Gew.-%, bezogen auf trockenen Rauchgasgips, eingesetzt und wirken als Mineralisatoren. Mit ihrer Hilfe ist es möglich, für bestimmte Anwendungszwecke bestimmte bevorzugte Kristallformen zu erzeugen. Diese Wirkung ist im folgenden Beispiel erläutert:

Beispiel 8

50 kg trockenes REA-Gips-Dihydrat werden mit 5 l Wasser homogen vermischt. In diesen 5 l Wasser wurden vorher 330 g (= 0,66% bezogen auf trockenen REA-Gips) Aluminiumfluorid-Trihydrat ($AlF_3\cdot3H_2O$) aufgelöst bzw. aufgeschlämmt. Zusätzlich werden dann noch 1,5 l Schwefelsäure mit der Dichte 1,74 in das REA-Gips-Dihydrat homogen eingemischt.

Die gesamte Mischung liegt als feuchtes Pulver vor. Diese Mischung wird dann 2 Stunden bei 90°C unter laufender Durchmischung gehalten. Dabei verdampft das gesamte Wasser (Feuchtwasser und Kristallwasser), und es entsteht ein trockenes weißes Pulver, welches aus feinstkristallinem rhombischen Calciumsulfat-Anhydrit II besteht. Die Primärkristalle dieses Anhydrit II sind dabei vorwiegend als Teilchen mit kompakter quader- bis würfelförmiger, geschichteter Struktur bei einer mittleren Teilchengröße von etwa 5 μm entstanden.

Zur weiteren anwendungstechnischen Aufbereitung kann dieser Anhydrit II zum Beispiel mit 80 kg kochendem Wasser aufgeschlämmt, mit einem Intensivrührer, zum Beispiel Ultra-Turrax, in etwa 5 bis 10 Minuten dispergiert und anschließend abdekantiert und/oder filtriert werden. Der so erhaltene Filterkuchen kann anschließend sofort zu einer Papierstreichmasse weiter aufbereitet werden.

**Patentansprüche**

1. Verfahren zur Herstellung von Calciumsulfat-Anhydrit und abbindefähigen Calciumsulfaten durch Umsetzung von Calciumsulfat-Dihydrat mit Säuren bei erhöhten Temperaturen, dadurch gekennzeichnet, daß feinteiliges Calciumsulfat-Dihydrat mit 0,5 bis 7 Gew.-%, vorzugsweise 1 bis 3 Gew.-% Schwefelsäure, Phosphorsäure oder Gemischen derselben, bei einem Gesamtflüssigkeitsgehalt des Gemisches von weniger als 20 Gew.-%, vorzugsweise zwischen 5 und 14 Gew.-% für eine bestimmte Zeit auf Temperaturen von 50 bis 130°C, vorzugsweise 70 bis 100°C erwärmt und gegebenenfalls mit der äquivalenten Menge Calciumhydroxid neutralisiert wird.

2. Verfahren zur Herstellung von Calciumsulfat-Anhydrit durch Umsetzung von Calciumsulfat-Dihydrat mit Schwefelsäure bei erhöhten Temperaturen, dadurch gekennzeichnet, daß feinteiliges Calciumsulfat-Dihydrat mit 0,5 bis 7 Gew.-%, vorzugsweise 1 bis 3 Gew.-% Schwefelsäure und einem Gesamtflüssigkeitsgehalt des Gemisches von weniger als 20 Gew.-%, vorzugsweise zwischen 7 und 14 Gew.-%, auf Temperaturen von 50 bis 130°C, vorzugsweise 70 bis 100°C erwärmt und gegebenenfalls mit der äquivalenten Menge Calciumhydroxid neutralisiert wird.

3. Verfahren zur Herstellung von abbindefähigen Calciumsulfaten durch Umsetzung von Calciumsulfat-Dihydrat mit Säuren bei erhöhten Temperaturen, dadurch gekennzeichnet, daß feinteiliges Calciumsulfat-Dihydrat mit 1 bis 3 Gew.-% Phophorsäure oder Gemischen aus Phosphorsäure und Schwefelsäure und einem Gesamtflüssigkeitsgehalt des Gemisches von weniger als 20 Gew.-%, vorzugsweise zwischen 5 und 14 Gew.-%, für eine bestimmte Zeit auf Temperaturen von 70 bis 100°C erwärmt und gegebenenfalls mit der äquivalenten Menge Calciumhydroxid neutralisiert wird.

4. Verfahren gemäß einem der Ansprüche 1 bis 3, dadurch gekennzeichnet, daß als Calciumsulfat-Dihydrat feuchter, feinteiliger Rauchgasgips verwendet wird.

5. Verfahren gemäß Anspruch 1 oder 4, dadurch gekennzeichnet, daß die Umsetzung gesteuert unvollständig erfolgt und ein Gemisch aus Calciumsulfat-Anhydrit und Calciumsulfat-Dihydrat im vorbestimmten Verhältnis entsteht, welches gegebenenfalls kompaktiert wird.

6. Verfahren gemäß Anspruch 1 oder 4, dadurch gekennzeichnet, daß das erhaltene Calciumsulfat-Anhydrit naß vermahlen wird zu Teilchen von kleiner als 5 µm, vorzugsweise kleiner als 2 µm Oberkorn.

7. Verfahren gemäß Anspruch 3 oder 4, dadurch gekennzeichnet, daß Gemische aus Phosphorsäure und Schwefelsäure im Verhältnis bis zu 1 : 2 eingesetzt werden.

8. Verfahren gemäß einem der Ansprüche 3 oder 4, dadurch gekennzeichnet, daß unter Verwendung reiner Phosphorsäure ein reines Calciumsulfat-Halbhydrat gewonnen wird.

9. Verfahren gemäß einem der Ansprüche 3, 4 oder 7, dadurch gekennzeichnet, daß unter Verwendung von Gemischen aus Phosphorsäure und Schwefelsäure ein Gemisch aus Calciumsulfat-Halbhydrat und Calciumsulfat-Anhydrit gewonnen wird.

10. Verfahren gemäß einem der Ansprüche 3, 4, 7 oder 9, dadurch gekennzeichnet, daß die Umsetzung gesteuert unvollständig erfolgt und ein Gemisch aus Caliumsulfat-Dihydrat, Calciumsulfat-Halbhydrat und gegebenenfalls Calciumsulfat-Anhydrit entsteht.

11. Verfahren gemäß einem der Ansprüche 1 bis 10, dadurch gekennzeichnet, daß das Feuchtwasser und das Kristallwasser als Dampf entfernt werden.

12. Verfahren gemäß einem der Ansprüche 1 bis 11, dadurch gekennzeichnet, daß bis zu 1 Gew.-% Aluminiumfluoride, bezogen auf den trockenen Rauchgasgips, als Mineralisatoren zugesetzt werden.

13. Verwendung der gemäß Ansprüchen 3 bis 12 hergestellten abbindefähigen Calciumsulfate für Hartputze und Bergbaumörtel.

14. Verwendung des gemäß Ansprüchen 2, 4 oder 6 hergestellten Calciumsulfat-Anhydrits als Füllstoff oder Streichmittel in der Papierindustrie.

## Claims

1. A process for preparing calcium sulfate anhydrite and calcium sulfates capable of setting by the reaction of calcium sulfate dihydrate with acids at elevated temperatures, characterized in that a finely divided calcium sulfate dihydrate is heated with from 0.5 to 7% by weight, and preferably from 1 to 3%, of sulfuric acid, phosphoric acid or mixtures thereof with a total liquid content of the mixture of less than 20% by weight, and preferably of between 5 and 14% by weight, at a temperature from 50°C to 130°C, and preferably from 70°C to 100°C, for a definite period of time and optionally is neutralized with the equivalent amount of calcium hydroxide.

2. A process for preparing calcium sulfate anhydrite by the reaction of calcium sulfate dihydrate with sulfuric acid at elevated temperatures, characterized in that a finely divided calcium sulfate dihydrate is heated with from 0.5 to 7% by weight, and preferably from 1 to 3%, of sulfuric acid with a total liquid content of the mixture of less than 20% by weight, and preferably of between 7 and 14% by weight, at a temperature from 50°C to 130°C, and preferably from 70°C to 100°C, for a definite period of time and optionally is neutralized with the equivalent amount of calcium hydroxide.

3. A process for preparing calcium sulfates capable of setting by the reaction of calcium sulfate dihydrate with acids at elevated temperatures, characterized in that a finely divided calcium sulfate dihydrate is heated with from 1 to 3% of phosphoric acid or mixtures of phosphoric acid and sulfuric acid with a total liquid content of the mixture of less than 20% by weight, and preferably of between 5 and 14% by weight, at a temperature from 70°C to 100°C, for a definite period of time and optionally is neutralized with the equivalent amount of calcium hydroxide.

4. The process according to any of claims 1 to 3, characterized in that moist finely divided flue gas gypsum is employed as the calcium sulfate dihydrate.

5. The process according to claims 1 or 4, characterized in that said reaction under controlled conditions is terminated before it is completed to thereby form a mixture comprising calcium sulfate anhydrite and calcium sulfate dihydrate in a predetermined ratio, which mixture then is optionally compacted.

6. The process according to claims 1 or 4, characterized in that the obtained calcium sulfate anhydrite is wet milled to form particles smaller than 5 µm, and preferably than 2 µm, of tailings.

7. The process according to claims 3 or 4, characterized in that mixtures comprising phosphoric acid and sulfuric acid in a ratio of up to 1:2 are employed.

8. The process according to claims 3 or 4, characterized in that a pure calcium sulfate hemihydrate is recovered upon use of pure phosphoric acid.

9. The process according to claims 3, 4 or 7, characterized in that a mixture of calcium sulfate hemihydrate and calcium sulfate anhydrite is recovered upon use of a mixture of phosphoric acid and sulfuric acid.

10. The process according to claims 3, 4, 7 or 9, characterized in that said reaction under controlled conditions is terminated before it is completed to thereby form a mixture comprising calcium sulfate dihydrate, calcium sulfate hemihydrate and optionally calcium sulfate anhydrite.

11. The process according to any of claims 1 to 10, characterized in that the moisture water and water of crystallization are removed by evaporation.

12. The process according to any of claims 1 to 11, characterized in that up to 1% by weight of aluminum fluorides, based on the dry flue gas gypsum are added as mineralizers.

13. Use of the calcium sulfates capable of setting prepared according to claims 3 to 12 as hard plaster or mortar for use in mining.

14. Use of the calcium sulfate anhydrite prepared according to claims 2, 4 or 6 as filler or coating agent in the paper industry.

## Revendications

1. Procédé pour la préparation de sulfate de calcium anhydre et de sulfates de calcium aptes à faire prise par transformation de dihydrate de sulfate de calcium par des acides à des températures élevées, caractérisé en ce que le dihydrate de sulfate de calcium finement divisé est chauffé avec 0,5 à 7% en poids, de préférence 1 à 3% en poids, d'acide sulfurique, d'acide phosphorique ou de mélanges de ces derniers, pour une teneur totale en liquide du mélange inférieure à 20% en poids, de préférence comprise entre 5 et 14% en poids, pendant une période déterminée, à des températures de 50 à 130°C, de préférence 70 à 100°C, et est neutralisé éventuellement avec une quantité équivalente d'hydroxyde de calcium.

2. Procédé pour la préparation de sulfate de calcium anhydre par transformation de dihydrate de sulfate de calcium par de l'acide sulfurique à des températures élevées, caractérisé en ce que le dihydrate de sulfate de calcium finement divisé est chauffé avec 0,5 à 7% en poids, de préférence 1 à 3% en poids, d'acide sulfurique, pour une teneur totale en liquide du mélange inférieure à 20% en poids, de préférence comprise entre 7 et 14% en poids, pendant une période déterminée, à des températures de 50 à 130°C, de préférence 70 à 100°C, et est neutralisé éventuellement avec une quantité équivalente d'hydroxyde de calcium.

3. Procédé pour la préparation de sulfates de calcium aptes à faire prise par transformation de dihydrate de calcium par des acides à des températures élevées, caractérisé en ce que le dihydrate de sulfate de calcium finement divisé est chauffé avec 1 à 3% en poids d'acide phosphorique ou de mélanges d'acide phosphorique et d'acide sulfurique, pour une teneur totale en liquide du mélange inférieure à 20% en poids, de préférence comprise entre 5 et 14% en poids, pendant une période déterminée, à des températures de 70 à 100°C, et est neutralisé éventuellement avec une quantité équivalente d'hydroxyde de calcium.

4. Procédé selon l'une des revendications 1 à 3, caractérisé en ce qu'on utilise comme dihydrate de sulfate de calcium, du gypse de gaz de combustion humide et finement divisé.

5. Procédé selon la revendication 1 ou 4, caractérisé en ce que la transformation s'effectue sous contrôle de manière incomplète et en ce qu'il en résulte un mélange de sulfate de calcium anhydre et de dihydrate de sulfate de calcium selon un rapport préétabli, qui peut être compacté le cas échéant.

6. Procédé selon la revendication 1 ou 4, caractérisé en ce que le sulfate de calcium anhydre est broyé à l'état humide en particules de moins de 5 μm, de préférence de moins de 2 μm.

7. Procédé selon la revendication 3 ou 4, caractérisé en ce que des mélanges d'acide phosphorique et d'acide sulfurique sont utilisés en un rapport allant jusqu'à 1 : 2.

8. Procédé selon les revendications 3 ou 4, caractérisé en ce qu'il est obtenu un semi-hydrate de sulfate de calcium pur en utilisant de l'acide phosphorique pur.

9. Procédé selon l'une des revendications 3, 4 ou 7, caractérisé en ce qu'il est obtenu un mélange de semihydrate de calcium et de sulfate de calcium anhydre en utilisant des mélanges d'acide phosphorique et d'acide sulfurique.

10. Procédé selon l'une des revendications 3, 4, 7 ou 9, caractérisé en ce que la transformation s'effectue de manière incomplète sous contrôle et en ce qu'il en résulte un mélange de dihydrate de sulfate de calcium, de semi-hydrate de sulfate de calcium et, le cas échéant, de sulfate de calcium anhydre.

11. Procédé selon l'une des revendications 1 à 10, caractérisé en ce que l'eau d'imprégnation et l'eau de cristallisation sont éliminées sous forme de vapeur.

12. Procédé selon l'une des revendications 1 à 11, caractérisé en ce qu'il est ajouté jusqu'à 1% du poids de fluorure d'aluminium, rapporté au gypse de gaz de combustion sec, en tant que minéralisant.

13. Utilisation des sulfates de calcium aptes à faire prise produits selon les revendications 3 à 12, pour des enduits durs et des mortiers d'exploitations minières.

14. Utilisation de sulfate de calcium anhydre produit selon les revendications 2, 4 ou 6, comme charge ou comme produit d'enduction dans l'industrie du papier.